# EUROPÄISCHE PATENTSCHRIFT

(11) **EP 0 535 411 B1**
(45) Veröffentlichungstag und Bekanntmachung des Hinweises auf die Patenterteilung: **07.06.1995**
(21) Anmeldenummer: 92115367.2
(22) Anmeldetag: 09.09.1992
(51) Int. Cl.: F16B 13/14

(54) **Klebstoffpatrone für einen Verbunddübel und Verfahren zu ihrer Herstellung**
Adhesive cartridge for a connecting dowel and procedure for its manufacture
Cartouche à adhésif pour cheville de connexion et procédé pour sa fabrication

(30) Priorität: 01.10.1991 DE 4132625
(43) Veröffentlichungstag der Anmeldung: 07.04.1993
(73) Patentinhaber: B + B TEC Holding AG, CH-3178 Bösingen (CH)
(72) Erfinder: van den Boogaart, Robert Wilhelm, NL-5130 NW Zaltbommel (NL); van der Zalm, Antonie, NL-5301 GC Zaltbommel (NL)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- WO-A-89/08202
- WO-A-89/08203

## Beschreibung

Die Erfindung betrifft eine Klebstoffpatrone, für einen Verbunddübel, bestehend aus einem zerstörbaren Gehäuse und einem Zweikomponentenklebstoff, wie Harz und Härter, die sich nach Einsetzen der Patrone in ein Dübelloch und Eintreiben eines Dübels in das Gehäuse zu einem den Dübel in dem Dübelloch festlegenden Klebstoff verbinden. Ferner ist die Erfindung auf Verfahren zur Herstellung einer solchen Klebstoffpatrone gerichtet.

Derartige Verbunddübel werden als Befestigungsmittel in Stein oder Beton eingesetzt. Zu diesem Zweck wird die Klebstoffpatrone in das Dübelloch eingebracht und anschließend der Dübel, z.B. eine Ankerstange, ein Armierungseisen oder dergleichen, in die Patrone eingeschlagen. Durch das Einschlagen des Dübels wird das Gehäuse zerstört und werden Harz und Härter durchmischt, wobei für eine einwandfreie Durchmischung zusätzlich ein Drehen des Dübels um mehrere volle Umdrehungen erforderlich ist. Die Mischung verteilt sich im Ringspalt zwischen Dübel und Dübelloch. Nach Aushärten des Harzes ist der Dübel im Dübelloch festgelegt.

Die WO 89/08203 zeigt eine Verankerungspatrone mit einem Zweikomponentenkleber für die Befestigung einer Ankerstange in einem Bohrloch, die in einem vorderen Patronenbereich mit Harz und in einem hinteren Patronenbereich mit einem Füllstoff und Härter gefüllt ist. Der vordere Patronenbereich ist vom hinteren Patronenbereich durch ein Zwischenstück aus zerstörbarem Glas oder Kunststoff getrennt. Eine vollständige Abdichtung zwischen Zwischenstück und Patronenwandung ist praktisch nicht erreichbar. Eine vollständige Durchmischung der Komponenten beim Eintreiben einer Ankerstange oder eines Armierungseisens ist bei einem solchen Zwischenstück nicht sichergestellt, da große Bruchteile des Zwischenstücks verbleiben und die Durchmischung nachteilig beeinflußt ist. Die Verwendung eines solchen Zwischenstücks ist durch die notwendigen Herstellungskosten sowie den Aufwand bei der Anwendung relativ teuer.

Weiterhin ist aus der WO 89/08202 eine zweischalige Klebstoffpatrone mit einer ein Harz enthaltenden rohrförmigen Innenpatrone bekannt. Die Innenpatrone ist von einem Füllstoff und Härter umgeben, durch die sie in einer definierten Lage innerhalb einer Außenpatrone gehalten wird. Hierbei ist als nachteilig anzusehen, daß die Herstellung der Klebstoffpatrone sehr aufwendig ist, da zwei Patronen notwendig sind, die zudem getrennt abgefüllt werden müssen und von denen die innere sehr genau in der äußeren Patrone positioniert werden muß, damit Harz und Härter sich einwandfrei vermischen können. Auch stört das aus der Innenpatrone nach dem Einschlafen des Dübels entstehende Bruchmaterial die Bindung zwischen Dübel und Klebstoff.

Es wurde darüber hinaus schon eine Klebstoffpatrone vorgeschlagen, die in der Außenwandung ihres Gehäuses Wellen aufweist, in denen eine Härterbeschichtung angeordnet ist und die zusätzlich auf einer Stirnseite eine Kappe mit einem Härter aufweist. Abgesehen davon, daß diese Konstruktion sehr aufwendig und kompliziert und damit teuer ist, muß die, Härterbeschichtung eine hinreichend feste Konsistenz haben, was die spätere Durchmischung mit dem im Gehäuse befindlichen Harz erschwert. Auch kann bei der üblichen Handhabung die Härterbeschichtung in den Wellen des Gehäuses beschädigt oder teilweise entfernt werden, wodurch das richtige Mischungsverhältnis zwischen Harz und Härter lokal beeinträchtigt wird und damit die Festigkeit des gesamten Dübels ebenfalls beeinträchtigt werden kann.

Der Erfindung liegt die Aufgabe zugrunde, eine Klebstoffpatrone für einen Verbunddübel zu schaffen, die bei besonders einfacher und damit preiswerter Ausgestaltung einen einfachen Einsatz, insbesondere unter Vermeidung der Notwendigkeit eines Eindrehens des Dübels, gestattet und sehr gute Halteeigenschaften aufweist.

Die Aufgabe wird gemäß den Merkmalen der unabhängigen Ansprüche durch eine Klebstoffpatrone und deren Herstellungsverfahren gelöst, wobei die Klebstoffkomponenten im Gehäuse in Einschlagrichtung hintereinanderliegend angeordnet sind und zwischen ihnen eine Trennschicht vorgesehen ist, die als solche aus Zweikomponentenklebstoff und gegebenenfalls Zuschlagstoffen gebildet ist.

Mit der Erfindung ergibt sich eine besonders einfache Ausbildung, da eine Innenpatrone entfällt. Es verringert sich ferner die erforderliche Kraft, um den Dübel einzuschlagen. Der Erfindung liegt die Idee zugrunde, daß der Dübel beim Eindringen die hintereinander angeordneten Klebstoffkomponenten gut vermischt, insbesondere wenn er keine Spitze, sondern eine stumpfe Stirnseite aufweist. Dabei wird der wesentliche Teil beider Klebstoffkomponenten in den Ringraum zwischen Ankerstab und Bohrloch verdrängt und zwangsweise vermischt. Untersuchungen haben gezeigt, daß der erfindungsgemäße Verbunddübel sehr hohe Haltekräfte bei guter Reproduzierbarkeit aufweist. Die Trennschicht zwischen den beiden Komponenten kann sehr dünn ausgebildet sein, so daß ihre Bruchstücke die Durchmischung der beiden Komponenten nicht beeinträchtigen.

Eine besonders preiswerte Ausgestaltung ergibt sich dann, wenn der Zweikomponentenklebstoff für die Trennschicht demjenigen für die Verankerung des Dübels entspricht.

Eine sehr haltbare Abdichtung der beiden Komponenten gegeneinander wird dadurch erreicht, daß die Trennschicht Feststoffpartikel, z.B. Sand und/oder Quarzkörner, enthält. Dabei werden die Sand- bzw. Quarzkörner vom Klebstoff durchtränkt und miteinander verklebt und bilden eine sehr feste, undurchlässige Trennschicht, so daß Eine ungewollte Reaktion zwischen den beiden Klebstoffkomponenten in der Patrone sicher vermieden wird.

Alternativ ist vorgesehen, daß die Trennschicht lediglich aus übereinanderliegenden Schichten von Klebstoffkomponenten ohne Partikeleinlagerung hergestellt ist. Hier sind insbesondere die mechanischen Eigenschaften des ausgehärteten Klebstoffs dafür entscheidend, ob eine zusätzliche Schicht aus Sand erforderlich ist. In diesem Fall empfiehlt es sich statt des Klebstoffs zum Verkleben des Dübels einen anderen Klebstoff zur Erzeugung der Trennschicht einzusetzen. Ein solcher bevorzugter Klebstoff zeichnet sich dadurch aus, daß er mit den anderen Klebstoffkomponenten der Patrone nicht reagiert und so eine einfache und schnelle Verarbeitung ermöglicht.

Um eine definierte Dicke der Trennschicht zu erhalten und insbesondere ein ungewolltes weiteres Reagieren von Klebstoffkomponenten der Trennschicht mit den anderen Klebstoffkomponenten der Patrone zu verhindern, ist zwischen der Trennschicht und zumindest einer Klebstoffkomponente der Patrone eine zusätzliche Dichtschicht vorgesehen.

Es hat sich als sehr günstig erwiesen, wenn die zusätzliche Dichtschicht aus Sand besteht.

Es ist vorgesehen, daß die Klebstoffkomponente mit dem kleineren Volumenanteil am Klebstoff nahe dem in Eintreibrichtung des Dübels hinteren Ende der Patrone angeordnet ist. Auf diese Weise wird beim Eintreiben des Dübels das kleinere Volumen in das größere verdrängt, so daß sichergestellt ist, daß die Klebstoffkomponente mit dem kleinen Volumenanteil in der anderen Klebstoffkomponente ausreichend dispergiert wird.

Eine bevorzugte Ausführungsform zeichnet sich dadurch aus, daß die nahe dem hinteren Ende der Patrone angeordnete Klebstoffkomponente pulverförmig und die andere flüssig ist. Hierdurch wird eine besonders gute Durchmischung beider Komponenten erreicht, da einerseits die pulverförmige Komponente, die schlechter ausweichen kann, in die flüssige Komponente verdrängt wird, andererseits die flüssige Komponente nach dem Zerstören des Gehäuses das Dübelloch schnell ausfüllen und aufgrund seiner Fließeigenschaften in Mischung mit der pulverförmigen Komponente an dem Dübel vorbeiströmen und den Ringspalt zwischen diesen und der Lochwandung ausfüllen kann.

Es hat sich als günstig erwiesen, wenn zwischen dem hinteren Ende der Patrone und der nächstliegenden Klebstoffkomponente eine Schutzschicht vorgesehen ist. Die Schutzschicht hat die Aufgabe, daß die dem Patronenende nächstliegende Klebstoffkomponente beim Eintreiben des Ankerstabes nicht so leicht in den Ringspalt zwischen Bohrung und Ankerstange ohne vorherige Durchmischung verdrängt werden kann.

Dabei besteht die Schutzschicht bevorzugt aus Sand. Dieser wird beim Eintreiben des Dübels als erste verdrängt und bildet dadurch eine Art Verdämmung für die nächstliegende Klebstoffkomponente, um sie am Ausweichen aus dem Dübelloch zu hindern. Um eine besonders gute Zerkleinerung des Gehäuses beim Eintreiben eines Dübels in die Patrone sicherzustellen, enthält die Schutzschicht Quarzkörner.

Als Verschluß der Patrone und/oder Schutz gegen Austreten von Klebstoff und Bruchstücken der Patronenhülle aus Glas beim Eintreiben des Dübels weist die Patrone am hinteren Ende eine Schutzkappe auf. Diese besteht vorzugsweise aus Kunststoff. Sie kann als Verschluß dienen oder aber einfach auf dem Boden der geschlossenen Patrone aufsitzen. Sie weist Schlitze oder Schwächungslinien in Kreuzform auf, durch die der Dübel hindurchgetrieben wird. Die Kappe überdeckt vorzugsweise mit einem Kragen den Öffnungsrand des Dübellochs.

Die Vorteile des erfindungsgemäß ausgebildeten Dübels werden in besonderem Maß auch in herstellungstechnischer Hinsicht offenbar. So zeichnet sich ein Verfahren zur Herstellung einer Klebstoffpatrone erfindungsgemäß dadurch aus, daß in dem Gehäuse zunächst die erste Klebstoffkomponente abgefüllt, anschließend zur Bildung einer Trennschicht eine Partikelschicht aufgeschüttet wird, daraufhin nacheinander die Komponenten eines Zweikomponentenklebstoffs aufgegeben und ausgehärtet werden und schließlich die mit der ersten zusammenwirkende zweite Klebstoffkomponente abgefüllt wird.

Es ist also lediglich ein patronenartiges Gehäuse erforderlich, in das nacheinander die notwendigen Komponenten und Zusätze abgefüllt werden. Die aufgeschüttete Menge an Partikeln wird so gering gewählt, daß sie in Verbindung mit den ausgehärteten Komponenten des Klebstoffs für die Trennschicht ausreichend stabil ist, um den typischen Beanspruchungen bei Transport- und Lagerung standzuhalten. Auch die Menge der beiden Klebstoffkomponenten für die Trennschicht wird entsprechend niedrig gehalten. Nach dem Aushärten ergibt sich ein hermetischer Abschluß für die zuvor abgefüllte erste Klebstoffkomponente, so daß die anschließend abgefüllte zweite Klebstoffkomponente von der ersteren isoliert ist.

Eine noch wirksamere Trennung ergibt sich dann, wenn nach dem Abfüllen der ersten Klebstoffkomponente eine erste Partikelschicht aufgeschüttet, anschließend die eine Komponente des Zweikomponentenklebstoffs der Trennschicht aufgegeben, daraufhin eine zweite Partikelschicht aufgeschüttet, dann die zweite Komponente des Zweikomponentenklebstoffs der Trennschicht aufgegeben, daraufhin die beiden letztgenannten Komponenten ausgehärtet werden und schließlich die zweite Klebstoffkomponente für den Verbunddübel abgefüllt wird.

Auf diese Weise läßt sich eine Klebstoffpatrone herstellen, bei der sowohl für die Trennschicht als auch für die Verankerung des Dübels der gleiche Zweikomponentenklebstoff verwendet werden kann, ohne daß es zu einer vorzeitigen Durchmischung der Klebstoffkomponente für den Dübel kommt.

In einer bevorzugten Verfahrensvariante ist vorgesehen, daß für die jeweils zuerst abgefüllte erste Klebstoffkomponente für den Verbunddübel und für die Trennschicht eine pulverförmige Klebstoffkomponente verwendet wird. Auf dieser wird die Trennschicht auf einer Schüttung aus Feststoffpartikeln gebildet, so daß ein Absinken in diese Schüttung nicht möglich ist.

Eine weitere Verfahrensvariante zeichnet sich dadurch aus, daß in das Gehäuse zunächst die erste, pulverförmige Klebstoffkomponente abgefüllt, anschließend zur Bildung einer Trennschicht eine Partikelschicht aufgeschüttet, daraufhin die zweite flüssige Klebstoffkomponente aufgegeben und schließlich Unterdruck über der zweiten Klebstoffkomponente angelegt wird, so daß aus der ersten, pulverförmigen Klebstoffkomponente herausgesaugte Luft einzelne Klebstoffpartikel in die Trennschicht trägt, so daß diese mit der teilweise in die Trennschicht eingedrungenen zweiten Klebstoffkomponente die Trennschicht zumindest in einem Schichtbereich aushärten.

Bevorzugt ist dabei vorgesehen, daß der Unterdruck beim Verschließen des Gehäuses erzeugt wird. Dies wird in einfacher Weise dadurch realisiert, daß das Gehäuse durch Erwärmen zugeschweißt wird und der Unterdruck beim Abkühlen eines über der zweiten Klebstoffkomponente verbliebenen Hohlraums entsteht. So ergibt sich der Vorteil, daß die einzelnen Komponenten ohne zeitliche Verzögerung nacheinander eingefüllt werden können und die Aushärtung der Trennschicht erst nach Fertigstellung der Patrone, beispielsweise in einem Lager, erfolgt.

Um die Klebstoffkomponente und die beim Eintreiben des Dübels entstehenden Bruchstücke zu verdämmen, werden in das Gehäuse vor dem Abfüllen der ersten Klebstoffkomponente Feststoffpartikel, z.B. Sand, zur Bildung einer Schutzschicht eingegeben.

Nachfolgend ist die Erfindung anhand zweier in der Zeichnung gezeigten Ausführungsbeispiele näher erläutert. Es zeigen:
- Figur 1: eine erste Ausführungsform einer Klebstoffpatrone im Schnitt; und
- Figur 2: eine zweite Ausführungsform einer Klebstoffpatrone im Schnitt.

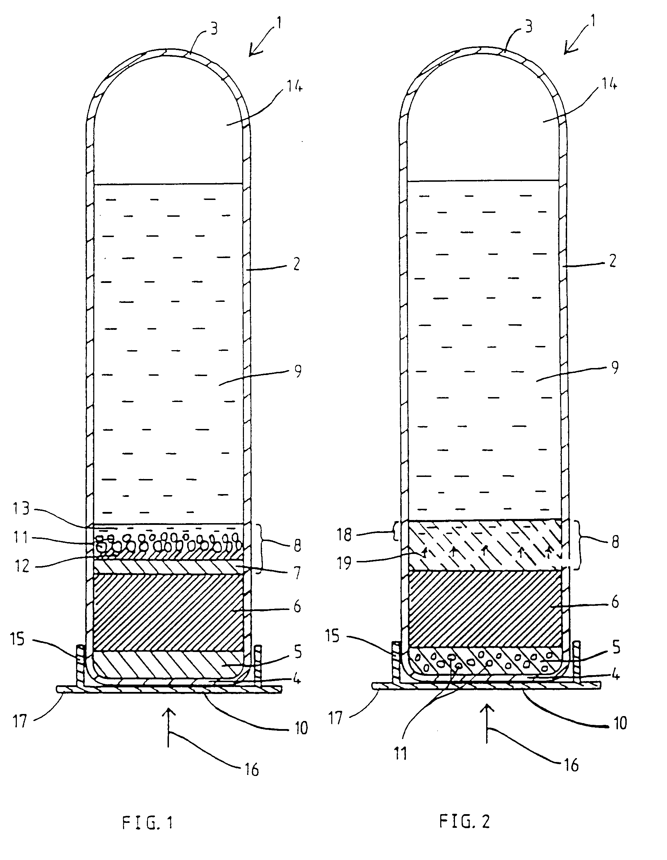

Eine Klebstoffpatrone 1 nach Figur 1 weist ein im wesentlichen zylinderförmiges Gehäuse 2 mit einem abgerundeten vorderen Ende 3, mit welchem die Patrone 1 voraus in ein Dübelloch eingesteckt wird und einem im wesentlichen flachen hinteren Ende 4 auf. Im Gehäuse 2 sind mehrere Schichten, die sich radial über den lichten Querschnitt des Gehäuses 2 erstrecken, axial hintereinanderliegend angeordnet. Vom hinteren Ende 4 beginnend sind eine Schutzschicht 5, eine erste Klebstoffkomponente 6 und eine Trennschicht 8 nacheinander angeordnet. Eine zweite Klebstoffkomponente 9 befindet sich im Gehäuse 2 im verbleibenden Raum zwischen der Trennschicht 8 und dem vorderen Ende 3. Des weiteren ist am hinteren Ende 4 eine Schutzkappe 10 aufgesetzt.

Die Patrone 1 wird hergestellt, indem das Gehäuse 2 ohne das vordere Ende 3 von oben her gefüllt wird. Als erstes wird Sand (SiO₂) als Schutzschicht 5 eingefüllt. Es folgt die erste Klebstoffkomponente 6. Im Ausführungsbeispiel wird hier ein pulverförmiger BPO-Härter (Bibenzoylperoxid-Härter) verwendet. Anschließend wird wiederum Sand (SiO₂) als provisorische Dichtschicht 7 und Teil der Trennschicht 8 eingefüllt. Im Ausführungsbeispiel wird die Trennschicht 8 ferner aus dem gleichen Klebstoff, der den Verbunddübel in dem Dübelloch festlegt, und eingelagertem feinen Quarzsand 11 gebildet. Hierzu wird als erstes auf die Dichtschicht 7 eine geringe Menge 12 der ersten Klebstoffkomponente 6 aufgegeben, anschließend eine dünne Quarzsandschicht 11 aufgeschüttet und schließlich eine Schicht 13 aus der zweitei Klebstoffkomponente 9 aufgegeben, die in diesem Fall ein flüssiges Harz ist. Die flüssige Klebstoffkomponente 9 der Schicht 13 durchdringt die Quarzschicht 11 und kommt zur Reaktion mit dem Härter in der Schicht 12. Nach dem Aushärten ist ein dichter Verbund von Quarzsand und Klebstoff gegeben, wobei dieser Verbund auch mit der Sandschicht 7 unter Bildung einer dichten Trennschicht 8 verbunden ist.

Nach Aushärten der Trennschicht 8 wird die flüssige, zweite Klebstoffkomponente 9 eingefüllt und das Gehäuse 2 am Ende 3, beispielsweise durch Schweißen, verschlossen. Hierbei entsteht ein Hohlraum 14 an dem Ende 3, der jedoch keine funktionellen Nachteile mit sich bringt. Anschließend wird die Schutzkappe 10, welche aus einem weichelastischen Material, wie Kunststoff, hergestellt ist, mit einem Ringflansch 15 auf das vordere Ende 4 aufgesteckt oder aufgeklebt. Somit ergibt sich eine sehr einfache, kostengünstige Herstellung.

Die Klebstoffpatrone 1 wird mit dem Ende 3 voraus in ein nicht dargestelltes Dübelloch, dessen Länge und Durchmesser auf die Patrone 1 abgestimmt ist, gemäß Pfeil 16 eingesteckt. Die Schutzkappe 10 überdeckt dann mit einem Kragen 17 den Öffnungsrand des Dübellochs vollständig. Es kann dann der Dübel mit einer Stirnseite voraus gemäß Pfeil 16 durch die, Schutzkappe 10, welche hierzu radiale Schlitze aufweist, eingetrieben werden. Er durchbricht den Gehäuseboden 4 und zerlegt aufgrund der. Vortriebskraft und der Druckerhöhung in der Patrone das Gehäuse 2. Als erstes wird der Sind der Schutzschicht 5 propfenartig vorangetrieben und allmählich zur Seite verdrängt. Beim weiteren Eintreiben treibt der Dübel einen wesentlichen Teil der ersten Klebstoffkomponente 6, also das pulverförmigen Härters, vor sich her und zerstört dabei die Trennschicht 8, so daß die pulverförmige Klebstoffkomponente 6 in die flüssige Klebstoffkomponente gelangt. Dabei und beim anschließenden Verdrängen in den Ringraum zwischen Bohrloch und Dübel findet eine intensive Durchmischung der Komponenten statt. Nach Aushärten der durchmischten Klebstoffkomponenten 6 und 9, ist der Dübel, z.B. eine Ankerstange, im Dübelloch festgelegt und kann belastet werden.

Figur 2 zeigt eine zweite Ausführungsform, wobei soweit als möglich die gleichen Bezugszeichen wie bei Figur 1 verwendet werden. Der wesentliche Unterschied zur ersten Ausführungsform besteht darin, daß diese Klebstoffpatrone 1 eine Trennschicht 8 aufweist, die mittels einer Schicht aus feinem Sand gebildet ist. Die Schutzschicht 5 ist mit gröberen Quarzkörnern 11 durchsetzt.

Die Patrone 1 nach Figur 2 wird hergestellt, indem das Gehäuse 2 von oben her als erstes mit Sand und Quarzkörnern 11 als Schutzschicht 5 befüllt wird. Es folgt die erste Klebstoffkomponente 6, der pulverförmige BPO-Härter. Anschließend wird ausschließlich Sand eingefüllt und damit die Trennschicht 8 gebildet. Danach wird die zähflüssige Klebstoffkomponente 9 eingefüllt. Diese benetzt einen Schichtbereich 18 des Sandes der Trennschicht 8; eine Verfestigung der Trennschicht 8 tritt jedoch noch nicht ein, da die Klebstoffkomponente 9 noch keinen Kontakt zur ersten Klebstoffkomponente 6 hat.

Nach Abfüllen der zweiten Klebstoffkomponente 9 wird das bis dahin offene Gehäuse 2 mit Hilfe einer Flamme an seinem vorderen Ende 3 verschlossen. Hierbei entsteht ein Unterdruck, der in der Schutzschicht 5 und der ersten Klebstoffkomponente 6 vorhandene Luft durch die Trennschicht 8 und die zweite Klebstoffkomponente 9 hindurch saugt. Mit dieser Luft wird etwas von dem feinpulverigen BPO-Härter, der ersten Klebstoffkomponente 6, in die Trennschicht 8 getragen, wie dies durch Pfeile 19 veranschaulicht wird. Nunmehr reagiert die in den Schichtbereich 18 der Trennschicht 8 eingedrungene Klebstoffkomponente 9 mit der durch das Herausziehen der Luft in den Bereich 18 eingetragenen ersten Klebstoffkomponente 6. Nach Aushärten ist die Trennschicht 8 zumindest im Schichtbereich 18 fest und undurchlässig, so daß numehr ein ungewolltes Durchmischen und Reagieren der beiden Klebstoffkomponenten 6 und 9, beispielsweise beim Transport, sicher vermieden wird.

Bei der Herstellung der zweiten Ausführungsform können die einzelnen Komponenten nacheinander eingefüllt werden, ohne daß die Aushärtezeit der Trennschicht 8 berücksichtigt werden muß. Erst beim abschließenden Zuschweißen des vorderen Endes 3 wird der Aushärteprozeß im Schichtbereich 18 der Trennschicht 8 in Gang gesetzt. Die dann herstellungstechnisch fertig gestellte Patrone 1 kann schon verpackt werden und anschließend vollständig aushärten, solange die bei der Herstellung vertikale Lage der Patrone 1 beibehalten wird.

Die fertiggestellte Klebstoffpatrone 1 nach Figur 2 wird entsprechend der ersten Ausführungsform verwerdet. Die in der Schutzschicht 5 vorgesehenen Quarzkörnern 11 dienen einer besseren Zerkleinerung des Gehäuses 2 beim Eintreiben eines nicht dargestellten Dübels. Selbstverständlich können je nach Wunsch auch bei der erster Ausführungsform nach Figur 1 Quarzkörner 11 in der Schutzschicht 5 vorgesehen sein.

## Patentansprüche

1. Klebstoffpatrone für einen Verbunddübel, bestehend aus einem zerstörbaren Gehäuse und einem Zweikomponentenklebstoff, wie Harz und Härter, die sich nach Einsetzen der Patrone in ein Dübel loch und Eintreiben eines Dübels in das Gehäuse zu einem den Dübel in dem Dübelloch festlegendei Klebstoff verbinden, wobei die Klebstoffkomponenten (6, 9) im Gehäuse (2) in Eintreibrichtung hintereinanderliegend angeordnet sind und zwischen ihnen eine aus Zweikomponentenklebstoff (6, 9) und gegebenenfalls Zuschlagstoffen gebildete Trennschicht (8) vorgesehen ist.

2. Patrone nach Anspruch 1, dadurch gekennzeichnet, daß der Zweikomponentenklebstoff für die Trennschicht (8) demjenigen für die Verankerung des Dübels entspricht.

3. Patrone nach einem der vorangehenden Ansprüche, dadurch gekennzeichnet, daß die Trennschicht (8) Feststoffpartikel, insbesondere feinen Sand enthält.

4. Patrone nach einem der vorangehenden Ansprüche, dadurch gekennzeichnet, daß die Trennschicht Quarzkörner (11) enthält.

5. Patrone nach einem der vorangehenden Ansprüche, dadurch gekennzeichnet, daß die erste Klebstoffkomponente (12) der Trennschicht (8) pulverförmig und die zweite Klebstoffkomponente (13) der Trennschicht (8) flüssig ist.

6. Patrone nach einem der vorangehenden Ansprüche, dadurch gekennzeichnet, daß zwischen der Trennschicht (8) und zumindest einer Klebstoffkomponente (6, 9) in dem Gehäuse (2) eine zusätzliche Dichtschicht (7) vorgesehen ist.

7. Patrone nach Anspruch 6, dadurch gekennzeichnet, daß die zusätzliche Dichtschicht (7) aus einer Partikelschüttung, z.B. Sand, besteht.

8. Patrone nach einem der vorangehenden Ansprüche, dadurch gekennzeichnet, daß die Klebstoffkomponente (6) mit dem kleineren Volumenanteil am Klebstoff (6, 9) nahe dem in Einschlagrichtung des Dübels hinteren Ende (4) der Patrone (1) angeordnet ist.

9. Patrone nach einem der vorangehenden Ansprüche, dadurch gekennzeichnet, daß die nahe den hinteren Ende (4) der Patrone (1) angeordnete Klebstoffkomponente (6) pulverförmig und die andere (9) flüssig ist.

10. Patrone nach einem der vorangehenden Ansprüche, dadurch gekennzeichnet, daß zwischen dem hinteren Ende (4) der Patrone (1) und der nächstliegenden Klebstoffkomponente (6) eine Schutzschicht (5) vorgesehen ist.

11. Patrone nach Anspruch 10, dadurch gekennzeichnet, daß die Schutzschicht (5) aus Sand besteht.

12. Patrone nach Anspruch 11 oder 12, dadurch gekennzeichnet, daß die Schutzschicht Quarzkörner (11) enthält.

13. Patrone nach einem der vorangehenden Ansprüche, dadurch gekennzeichnet, daß auf dem hinteren Ende (4) der Patrone (1) eine Schutzkappe (10) aufsitzt.

14. Patrone nach Anspruch 13, dadurch gekennzeichnet, daß die Patrone (1) am hinteren Ende (4) mit einer Schutzkappe (10) verschlossen ist.

15. Verfahren zur Herstellung einer Klebstoffpatrone für einen Verbunddübel nach einem der Ansprüche 3 bis 14, dadurch gekennzeichnet, daß in dem Gehäuse zunächst die erste Klebstoffkomponente abgefüllt, anschließend zur Bildung einer Trennschicht eine Partikelschicht aufgeschüttet wird, daraufhin nacheinander die Komponenten eines Zweikomponentenklebstoffs aufgegeben und ausgehärtet werden und schließlich die mit der ersten zusammenwirkende zweite Klebstoffkomponente abgefüllt wird.

16. Verfahren nach Anspruch 15, dadurch gekennzeichnet, daß nach dem Abfüllen der ersten Klebstoffkomponente eine erste Partikelschicht aufgeschüttet, anschliessend die eine Komponente des Zweikomponentenklebstoffs der Trennschicht aufgegeben, daraufhin eine zweite Partikelschicht aufgeschüttet, dann die zweite Komponente des Zweikomponentenklebstoffs der Trennschicht aufgegeben, daraufhin die beiden letztgenannten Komponenten ausgehärtet werden und schließlich die zweite Klebstoffkomponente für den Verbunddübel abgefüllt wird.

17. Verfahren nach einem der Ansprüche 15, bis 16, dadurch gekennzeichnet, daß für die Verbunddübel und für die Trennschicht der gleiche Zweikomponentenklebstoff verwendet wird.

18. Verfahren nach einem der Ansprüche 15, bis 17, dadurch gekennzeichnet, daß die für die jeweils zuerst abgefüllte erste Klebstoffkomponente für den Verbunddübel und für die Trennschicht eine pulverförmige Klebstoffkomponente verwendet wird, während die jeweils zweite Klebstoffkomponente flüssig ist.

19. Verfahren zur Herstellung einer Klebstoffpatrone für einen Verbunddübel nach einem der Ansprüche 5 bis 14, dadurch gekennzeichnet, daß in das Gehäuse zunächst die erste, pulverförmige Klebstoffkomponente abgefüllt, anschließend zur Bildung einer Trennschicht eine Partikelschicht aufgeschüttet, daraufhin die zweite flüssige Klebstoffkomponente aufgegeben und schließlich Unterdruck über der zweiten Klebstoffkomponente angelegt wird, so daß aus der ersten, pulverförmigen Klebstoffkomponente herausgesaugte Luft einzelne Klebstoffpartikel in die Trennschicht trägt, so daß diese mit der teilweise in die Trennschicht eingedrungenen zweiten Klebstoffkomponente die Trennschicht zumindest in einem Schichtberich aushärten.

20. Verfahren nach Anspruch 19, dadurch gekennzeichnet, daß der Unterdruck beim Verschließen des Gehäuses erzeugt wird.

21. Verfahren nach Anspruch 20, dadurch gekennzeichnet, daß das Gehäuse durch Erwärmen zugeschweißt wird und der Unterdruck beim Abkühlen eines über der zweiten Klebstoffkomponente verbliebenen Hohlraums entsteht.

22. Verfahren nach einem der Ansprüche 15 bis 21, dadurch gekennzeichnet, daß in das Gehäuse vor dem Abfüllen der ersten Klebstoffkomponente Feststoffpartikel, z.B. Sand, zur Bildung einer Schutzschicht eingegeben werden.

## Claims

1. Adhesive cartridge for a connecting dowel, comprising a destructible casing and a two-component adhesive, such as a resin and hardener, which combine after the introduction of the cartridge into a dowel hole and driving a dowel into the casing to form an adhesive fixing the dowel in the dowel hole, the adhesive components (6,9) being successively arranged in the casing (2) in the driving in direction and between them is provided a separating layer (8) formed from two-component adhesive (6,9) and optionally aggregates.

2. Cartridge according to claim 1, characterized in that the two-component adhesive for the separating layer (8) is the same as that for anchoring the dowel.

3. Cartridge according to one of the preceding claims, characterized in that the separating layer (8) contains solid particles, particularly fine sand.

4. Cartridge according to one of the preceding claims, characterized in that the separating layer contains quartz granules (11).

5. Cartridge according to one of the preceding claims, characterized in that the first adhesive component (12) of the separating layer (8) is pulverulent and the second adhesive component (13) of the separating layer (8) is liquid.

6. Cartridge according to one of the preceding claims, characterized in that between the separating layer (8) and at least one adhesive component (6,9) in the casing (2) is provided an additional sealing layer (7).

7. Cartridge according to claim 6, characterized in that the additional sealing layer (7) comprises a particle bed e.g. sand.

8. Cartridge according to one of the preceding claims, characterized in that the adhesive component (6) with the smaller adhesive volume proportion (6,9) is positioned close to the rear end (4) of the cartridge (1) in the dowel driving in direction.

9. Cartridge according to one of the preceding claims, characterized in that the adhesive component (6) positioned close to the rear end (4) of the cartridge (1) is pulverulent and the other (9) is liquid.

10. Cartridge according to one of the preceding claims, characterized in that a protective layer (5) is provided between the rear end (4) of the cartridge (1) and the nearest adhesive component (6).

11. Cartridge according to claim 10, characterized in that the protective layer (5) is of sand.

12. Cartridge according to claim 11 or 12, characterized in that the protective layer contains quartz granules (11).

13. Cartridge according to one of the preceding claims, characterized in that there is a protective cap (10) on the rear end (4) of the cartridge (1).

14. Cartridge according to claim 13, characterized in that at the rear end (4) the cartridge (1) is closed by a protective cap (10).

15. Method for the manufacture of an adhesive cartridge for a connecting dowel according to one of the claims 3 to 14, characterized in that firstly the first adhesive component is filled into the casing and then for forming a separating layer a particle layer is poured in, this being successively followed by the addition of the components of a two-component adhesive and hardening and finally the second adhesive component cooperating with the first is introduced.

16. Method according to claim 15, characterized in that after feeding in the first adhesive component a first particle layer is poured on, then one component of the two-component adhesive is supplied to the separating layer, then a second particle layer is poured on, then the second component of the two-component adhesive is supplied to the separating layer, then the two latter components are hardened and finally the second adhesive component for the connecting, dowel is introduced.

17. Method according to one of the claims 15 or 16, characterized in that the same two-component adhesive is used for the connecting dowel and for the separating layer.

18. Method according to one of the claims 15 to 17, characterized in that the first adhesive component fed in first for the connecting dowel and for the separating layer is constituted by a pulverulent adhesive component, whereas the second adhesive component is liquid.

19. Method for the manufacture of an adhesive cartridge for a connecting dowel according to one of the claims 5 to 14, characterized in that in the casing is firstly filled the first, pulverulent adhesive component, then a particle layer is poured in for forming a separating layer, then the second, liquid adhesive component is fed in and finally a vacuum is applied over the second adhesive component, so that air sucked out of the first, pulverulent adhesive component carries individual adhesive particles into the separating layer, so that the latter with the second adhesive component which has partly penetrated the adhesive layer harden the latter at least in an area thereof.

20. Method according to claim 19, characterized in that the vacuum is produced on closing the casing.

21. Method according to claim 20, characterized in that the casing is welded closed by heating and the vacuum is formed on cooling a cavity left over the second adhesive component.

22. Method according to one of the claims 15 to 21, characterized in that prior to the filling in of the first adhesive component solid particles, e.g. sand are introduced into the casing for forming a protective layer.

## Revendications

1. Cartouche à adhésif pour cheville d'assemblage, consistant en un boîtier destructible et une colle à deux composants, comme une résine et un durcisseur, qui, après la mise en place de la cartouche dans un trou de cheville et l'insertion d'une cheville dans le boîtier, se lient en une colle qui fixe la cheville dans le trou de cheville, cartouche dans laquelle les composants de la colle (6, 9) sont disposés dans le boîtier (2) l'un derrière l'autre dans le sens de l'insertion, et entre eux, une couche de séparation (8) formée d'une colle à deux composants (6, 9) et, le cas échéant, de matériaux supplémentaires est prévue.

2. Cartouche selon la revendication 1, caractérisée en ce que la colle à deux composants pour la couche de séparation (8) correspond à celle pour la fixation de la cheville.

3. Cartouche selon l'une des revendications précédentes, caractérisée en ce que la couche de séparation (8) contient des particules solides, notamment du sable fin.

4. Cartouche selon l'une des revendications précédentes, caractérisée en ce que la couche de séparation (8) contient des grains de quartz (11).

5. Cartouche selon l'une des revendications précédentes, caractérisée en ce que le premier composant (12) de la colle de la couche de séparation (8) est pulvérulent et le deuxième composant (13) de la colle de la couche de séparation (8) est liquide.

6. Cartouche selon l'une des revendications précédentes, caractérisée en ce que le boîtier présente une couche d'étanchéité (7) supplémentaire entre la couche de séparation (8) et au moins un des composants (6, 9) de la colle.

7. Cartouche selon l'une des revendications précédentes, caractérisée en ce que la couche d'étanchéité (7) supplémentaire consiste en une couche déversée de particules, par exemple du sable.

8. Cartouche selon l'une des revendications précédentes, caractérisée en ce que le composant (6) de la colle représentant la partie de la colle (6, 9) la plus réduite en volume est disposé à proximité de l'extrémité arrière (4) de la cartouche (1) dans le sens d'insertion de la cheville.

9. Cartouche selon l'une des revendications précédentes, caractérisée en ce que le composant (6) de la colle qui est disposé à proximité de l'extrémité arrière de la cartouche (1) est pulvérulent et l'autre (9) est liquide.

10. Cartouche selon l'une des revendications précédentes, caractérisée en ce qu'une couche de protection (5) est disposée entre l'extrémité arrière (4) de la cartouche (1) et le composant (6) le plus proche de la colle.

11. Cartouche selon la revendication 10, caractérisée en ce que la couche de protection (5) consiste en du sable.

12. Cartouche selon l'une des revendications 10 ou 11, caractérisée en ce que la couche de protection (5) contient des grains de quartz (11).

13. Cartouche selon l'une des revendications précédentes, caractérisée en ce qu'un capuchon de protection (10) est monté sur l'extrémité arrière (4) de la cartouche (1).

14. Cartouche selon la revendication 13, caractérisée en ce que la cartouche (1) est obturée à son extrémité arrière (4) par un capuchon de protection (10).

15. Procédé de fabrication d'une cartouche à adhésif pour cheville d'assemblage selon l'une des revendications 3 à 14, caractérisé en ce que l'on verse d'abord dans le boitier le premier composant de la colle, puis on déverse une couche de particules pour former une couche de séparation, après quoi on verse et on laisse durcir les composants d'une colle à deux composants, et enfin, on verse le deuxième composant de la colle, destiné à agir en combinaison avec le premier.

16. Procédé selon la revendication 15, caractérisé en ce que, après avoir verse le premier composant de la colle, on déverse une première couche de particules, puis on verse un premier composant de la colle à deux composants de la couche de séparation, on verse le deuxième composant de la colle à deux composants de la couche de séparation, on laisse durcir ces deux derniers composants, et enfin, on verse le deuxième composant de la colle destinée à la cheville d'assemblage.

17. Procédé selon l'une des revendications 15 à 16, caractérisé en ce que l'on utilise la même colle à deux composants pour la cheville d'assemblage et pour la couche de séparation.

18. Procédé selon l'une des revendications 15 à 17, caractérisé en ce que l'on utilise pour chacun des premiers composants de chaque colle qui est versé en premier un composant pulvérulent, aussi bien pour la colle de la cheville d'assemblage que pour la couche de séparation, tandis que chaque deuxième composant de chaque colle est liquide.

19. Procédé de fabrication d'une cartouche à adhésif pour cheville d'assemblage selon l'une des revendications 5 à 14, caractérisé en ce que l'on verse d'abord dans le boitier le premier composant pulvérulent de la colle, puis on déverse une couche de particules pour former une couche de séparation, on verse le deuxième composant liquide de la colle, et enfin, on applique une dépression à travers le deuxième composant de la colle, de façon que l'air aspiré depuis le premier composant pulvérulent de la colle transporte quelques particules de colle dans la couche de séparation, de façon que cet air, avec le deuxième composant de colle qui a pénétré partiellement dans la couche de séparation, durcisse la couche de séparation au moins dans une zone formant une couche.

20. Procédé selon la revendication 19, caractérisé en ce que l'on produit la dépression lors de l'obturation du boîtier.

21. Procédé selon la revendication 20, caractérisé en ce que l'on obture le boîtier en le soudant à la chaleur, la dépression résultant du refroidissement d'un espace creux laissé au dessus du second composant de la colle.

22. Procédé selon l'une des revendications 15 à 21, caractérisé en ce que l'on verse des particules solides, par exemple du sable, dans le boîtier avant le remplissage du premier composant de la colle, pour former une couche de protection.
